# EUROPEAN PATENT APPLICATION

(11) **EP 4 154 844 A1**
(43) Date of publication of application: **29.03.2023**
(21) Application number: 21199224.3
(22) Date of filing: 27.09.2021
(51) Int. Cl.: A61C 9/00, A61C 13/01, A61C 13/10, A61C 13/34

(54) **METHOD, SYSTEM, COMPUTER PROGRAM AND DEVICE FOR REMOTE ANALYSIS OF DENTAL PROSTHESIS**

(71) Applicant: Vigident, 6041 Charleroi (BE)
(72) Inventor: BENOLIEL, Simon, 75011 Paris (FR)
(74) Representative: Calysta NV

(57) **Abstract**

Method for remote analysis of a dental prosthesis (1) comprising the following steps: placing the dental prosthesis (1) on a visual enhancement device (10), wherein the visual enhancement device (10) comprises a mirror system which allows to show the dental prosthesis (1) from at least one indirect perspective view in addition to a direct perspective view of the dental prosthesis (1); taking with a camera (21) an image (40) of the dental prosthesis (1) placed on the visual enhancement device (10) such that the image (40) shows the direct perspective view and the at least one indirect perspective view of the dental prosthesis (1); sending the image (40) of the dental prosthesis (1) to a server (30); and analysing the image (40) of the dental prosthesis (1) in the server (30).

## Description

### Technical Field

The present invention relates to a method, system, computer program and/or device to improve the prophylaxis and care for dental prosthesis.

### Prior art

The dental sector is evolving, and more and more dental services can be done from home. For example, WO2021/058582A1 discloses an intraoral device helping to take a photo of the dental arch of a patient with a smartphone and send this to dentist for remote analysis. The photo can also be sent to an Al engine which analyses the dental arch shown in the photo to detect any pathologies.

Even if dental prostheses need similar care as natural teeth of a patient, they are often neglected. Problems of bad hygiene, cracks, breaks or others are often not detected for a long time leading to problems in the mouth of the patient or to replacement of the dental prosthesis before it could be remedied. If problems with a dental prosthesis are detected at an early stage, the lifetime of the prosthesis can be significantly lengthened.

WO2018/167383 discloses a method to detect a dental prosthesis from a photo, for example when a dental prosthesis is found in a retirement home and the owner must be identified.

EP2620912 discloses a method to take a photo of the oral cavity to create a 3D model of the teeth to plan the form and position of a future dental implant of the patient.

EP3857508 discloses a quality control method for 3D printed dental prosthesis. A special table with one or two cameras and a special light and/or rotations mechanism allows to reconstruct the 3D form of the printed dental prosthesis to detect 3D form errors and other flaws of the dental prosthesis before sending it out to the patient.

### Brief summary of the invention

It is the object of the invention to provide a method, system, computer program and/or device to improve the prophylaxis and care for dental prosthesis.

According to the invention, this object is solved by the method, system, computer program and visual enhancement device according to the independent claims.

The mirror system of the visual enhancement device allows to show in one image different sides of the dental prosthesis so that with one or only few images most or all sides of the dental prosthesis could be shown. This allows to remotely analysing the dental prosthesis by only one or few images of the dental prosthesis. This allows to periodically check the state of a dental prosthesis by simply making one or two images with a camera and send them to a server for analysing the image. Especially, people with movement problems can check the state of their dental prosthesis regularly and/or can verify before going to a dentist, if such a visit is really necessary. In addition, such a multi-view image of the dental prosthesis allows to identify the dental prosthesis, in case of lost dental prosthesis, with a low error.

The dependant claims refer to further advantageous embodiments.

In one embodiment, the visual enhancement device comprises a prosthesis portion arranged in a device plane, wherein the dental prosthesis is placed on the prosthesis portion.

In one embodiment, the mirror system comprises at least one mirror, preferably two or more mirrors. More mirrors allow to show more (independent) indirect perspective views of the dental prosthesis.

In one embodiment, the at least one mirror is arranged such that the normal vector of the reflective surface of the mirror includes a mirror angle with a device axis, wherein the mirror angle is between 55° and 70° and wherein the device axis is perpendicular to the device plane. This mirror angle allows to show the dental prosthesis in its direct view as well as in its indirect view optimally.

In one embodiment, the at least one mirror extends from the device plane in a top direction with an inclination away from the prosthesis portion, wherein camera is positioned such above the prosthesis portion with the dental prosthesis for taking the image that the at least one mirror opens towards the camera. This allows to take with a camera position above the visual enhancement device the direct and indirect view of the dental prosthesis place on the visual enhancement device.

In one embodiment, the visual enhancement device comprises a base structure, wherein the base structure is arranged in the device plane and comprises the prosthesis portion.

In one embodiment, the at least one mirror comprises two mirrors arranged around the prosthesis portion so that the two mirrors show two indirect perspective views of the dental prosthesis placed on the prosthesis portion.

In one embodiment, the mirror system and/or the at least one indirect perspective view is configured to show at least two peripheral sides of the dental prosthesis and/or to show at least 180° of the peripheral side(s) of the dental prosthesis.

In one embodiment, the visual enhancement device can be mounted in a mounted state and dismounted in a dismounted state, wherein, in the mounted state, the visual enhancement device is configured to show the dental prosthesis from at least one indirect perspective view in addition to a direct perspective view of the dental prosthesis, and, in the dismounted state, the visual enhancement device has a substantially flat arrangement or the at least one mirror is arranged parallel to the device plane or the base structure.

In one embodiment, the base structure comprises at least one recess to hold the at least one mirror in the mounted state.

In one embodiment, the step of taking an image of the dental prosthesis comprises to arrange the camera such above the visual enhancement device that the image covers in a first image portion the direct perspective view of the the dental prosthesis and the mirror system showing the at least one indirect perspective view of the dental prosthesis.

In one embodiment, the step of arranging the camera above the visual enhancement device comprises to display a reference pattern over a live image taken by the camera and to arrange the camera such that the displayed reference pattern corresponds to a pattern marked on the visual enhancement device and shown in the live image.

In one embodiment, the dental prosthesis is rotated on the visual enhancement device after the image has been taken by the camera and a second image of the rotated dental prosthesis is taken by the camera, wherein the second image is sent to the server, wherein the server analyses the dental prosthesis based on the image and based on the second image.

In one embodiment, analysing the dental prosthesis based on the image comprises the step of analysing the dental prosthesis based on a direct perspective view of the dental prosthesis shown in a first portion of the image and based on at least one indirect view of the dental prosthesis in at least one further portion of the image.

In one embodiment, analysing the dental prosthesis comprises to check the state of the dental prosthesis. Preferably, the state of the dental prosthesis is checked by detecting flaws of the dental prosthesis, wherein the flaws are detected based on an artificial intelligence engine, wherein the artificial intelligence engine was trained based on a plurality of training images, wherein the training images show each a dental prosthesis and contain labels, wherein a label indicates an image portion with a flaw of the prosthesis and the type of flaw seen in the image portion. Preferably, the training image show a dental prosthesis placed on the visual enhancement device.

In one embodiment, a plurality of dental prostheses are registered in the server, wherein the analysing of the dental prosthesis comprises identifying the dental prosthesis of the image received among the registered dental prostheses. Preferably, a registered dental prosthesis has stored in the server an associated an image showing the registered dental prosthesis placed on the visual enhancement device, wherein the dental prosthesis of the image received is identified by comparing the image received with the stored images of the registered dental prostheses.

In one embodiment, the camera is integrated in a smartphone, wherein the smartphone has a prosthesis application running to authenticate a user with respect to the server and to send the image to the server. Preferably, the prosthesis application supports the user to take the image.

Other embodiments according to the present invention are mentioned in the appended claims, the subsequent description of

### Brief description of the Drawings

Fig. 1 shows an embodiment of a system according to the invention to perform remote analysis of the dental prosthesis.
Fig. 2 shows an embodiment of a visual enhancement device for a dental prosthesis according to the invention.
Fig. 3 shows the visual enhancement device of Fig. 2 in a dismounted state.
Fig. 4 shows a photo taken from a dental prosthesis placed on the visual enhancement device.
Fig. 5 shows an embodiment for a method according to the invention to analyse a dental prothesis.
Fig. 6 shows an embodiment for a method according to the invention to analyse a dental prothesis in the server or in a computer program running on the server.

In the drawings, the same reference numbers have been allocated to the same or analogue element.

### Detailed description of an embodiment of the invention

Other characteristics and advantages of the present invention will be derived from the non-limitative following description, and by making reference to the drawings and the examples.

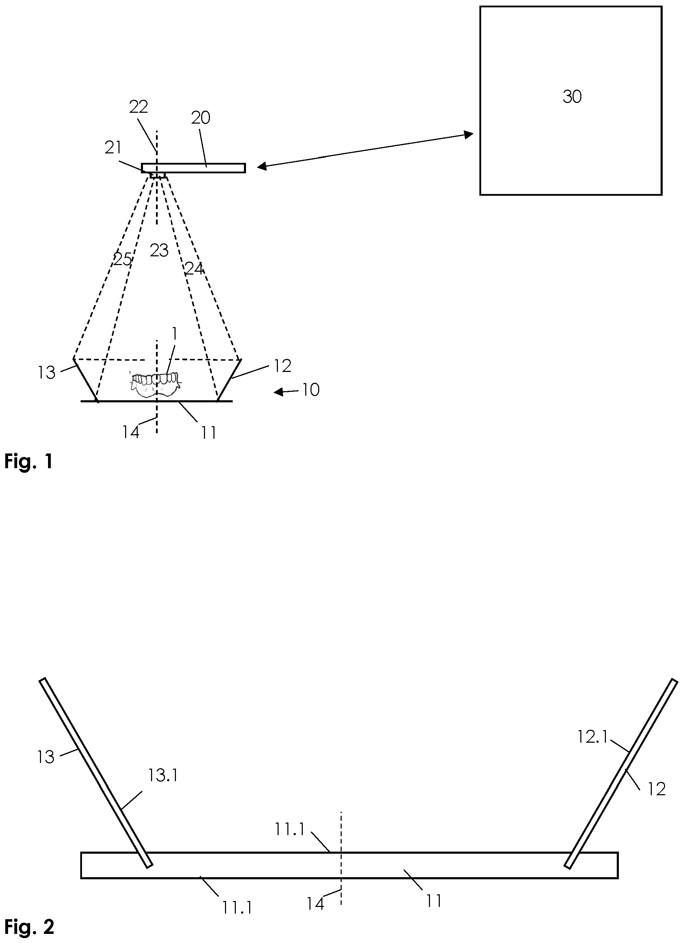

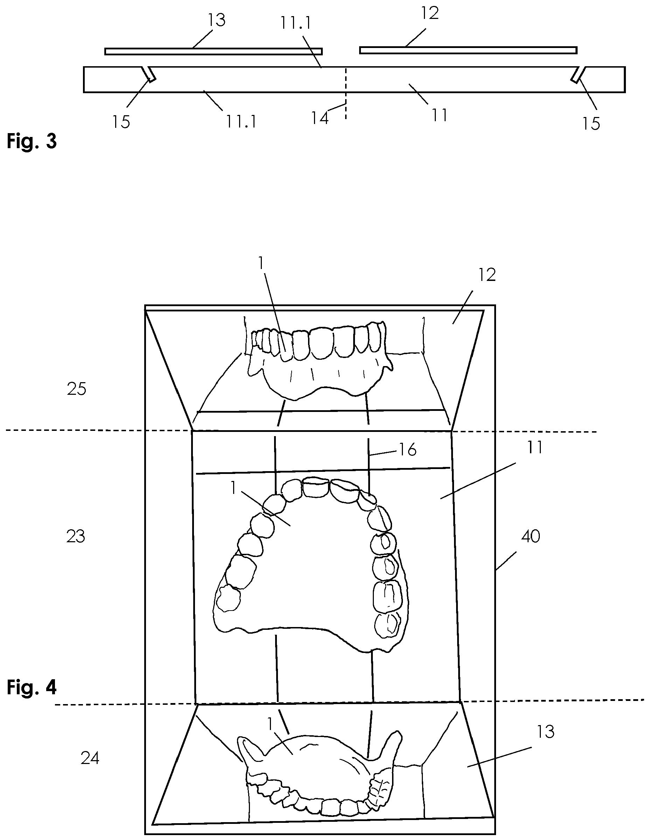

A dental prosthesis 1 according to the invention means a removable or a removed dental prosthesis 1, i.e. a dental prosthesis 1 which is not fixed in the mouth. This can be for example dentures (false teeth), partial denture, but also a dental appliance. Normally, this does not include dental implants, crowns, bridges as long as they are still fixed in the mouth, because the method according to the invention requires that the dental prosthesis 1 is removed from the mouth. For the description of the dental prosthesis 1, we define without any limitation six sides or perspective views: a first lay side/view, a second lay side/view, a first peripheral side/view, a second peripheral side/view, a third peripheral side/view, a fourth peripheral side/view. The first lay side is preferably a side of the dental prosthesis 1 on which the dental prosthesis 1 can be laid on a flat surface, for example the side of the false teeth arranged towards the gums. The second lay side is preferably arranged substantially opposed to the first lay side, for example the occlusal side of the false teeth. The peripheral sides are preferably the sides of the dental prothesis being arranged substantially perpendicular to one or both of the lay sides. The first peripheral side is preferably arranged opposed to and/or parallel to the second peripheral side and/or perpendicular to the third and/or fourth peripheral side. The third peripheral side is preferably arranged opposed to and/or parallel to the fourth peripheral side and/or perpendicular to the first and/or second peripheral side. In the example of the false teeth, the labial side could correspond to the first peripheral side, the lingual or throat side to the second peripheral side, the first buccal side to the third peripheral side, the second buccal side to the fourth peripheral side. If the false teeth shown in Fig. 1 and 4 are laid with the labial side on the device plane or the visual enhancement device 10, the labial side of the false teeth would correspond to the first lay side and the occlusal side of the false teeth and the side of the false teeth arranged towards the gums would rather be peripheral sides. For other dental prosthesis 1, the sides can obviously correspond to other parts of the dental prosthesis 1. The first lay view corresponds to a view on the dental prosthesis 1 on the first lay side of the dental prosthesis 1. The remaining views correspond analogously to the remaining sides. So, the sides of the dental prosthesis 1 are defined rather by its positioning in the visual enhancement device 10 than by the dental prosthesis 1 itself. For describing the invention, the six sides and views have been defined without limiting the invention. Any other number of sides could also be defined to describe the invention.

Fig. 1 shows an embodiment of a system according to the invention to perform remote analysis of the dental prosthesis 1. The system comprises a visual enhancement device 10, a camera 21 and a server 30.

Fig. 2 shows an embodiment of the visual enhancement device.

The visual enhancement device 10 comprises preferably a device plane. The device plane is preferably the plane of the visual enhancement device 10 on which the dental prosthesis 1 should be placed (for taking the image). The device plane is roughly parallel to the two lay sides of the dental prosthesis 1. The device axis 14 shall be defined as the direction being perpendicular to the device plane, i.e. the normal direction of the device plane. To formulate differently, the device plane is spanned by two vectors being both perpendicular to the device axis 14. The peripheral side(s) of the dental prosthesis 1 shall be the side(s) which is/are roughly arranged in one or more radial directions with respect to the device axis. A top direction is defined as a direction parallel to the device axis in a first direction, and a bottom direction is defined as a direction parallel to the device axis in a second direction opposed to the top direction. Above the device plane shall indicate a position on the side of the device plane arranged in the top direction from the device plane. Below the device plane shall indicate a position on the side of the device plane arranged in the bottom direction from the device plane.

The visual enhancement device 10 comprises a prosthesis portion configured to place the dental prosthesis 1 on it (for taking the images as explained in more detail). The prosthesis portion is arranged on the device plane. Preferably, the visual enhancement device 10 comprises a base structure 11 realising the prosthesis portion. The base structure realising the prosthesis portion is preferably flat and/or parallel to the device plane or better in the device plane (at least in the region of the prosthesis portion). The base structure 11 is preferably a (flat) board 11 as shown in the embodiment in the figures 1 to 3. However, in an alternative embodiment, the visual enhancement device 10 can be realised without a structural realisation of the prosthesis portion or with a different structural realisation. For example, the visual enhancement device 10 can have an opening which is placed on a flat surface like a table so that the flat surface like the table forms the prosthesis portion of the visual enhancement device 10. Thus, the device plane would be spanned by the opening border which is configured to lay on a flat surface.

The visual enhancement device 10 comprises a mirror system configured to show the dental prosthesis 1 placed on the prosthesis portion from at least one indirect perspective view. Thus, when the dental prosthesis is placed on the prosthesis portion, the dental prosthesis 1 can be seen from at least two different perspective views, the direct perspective view and at least one indirect perspective view resulting from a reflection of the dental prosthesis 1 in the mirror system. The mirror system comprises at least one mirror 12, 13. The mirror system and/or the at least one mirror 12, 13 is arranged such that, from above the prosthesis portion, the at least one indirect perspective view and/or the at least one peripheral side of the dental prosthesis 1 placed on the prosthesis portion is visible in the mirror system and/or the at least one mirror 12, 13. The at least one mirror of the mirror system is arranged such that the reflective side of the mirror points towards the prosthesis portion. The at least one mirror 12, 13 of the mirror system is preferably arranged such that the normal vector of the reflective surface of the mirror (in the reflective direction) includes an angle with the device axis 14 (in the top direction) which is larger than 40°, preferably than 45°, preferably than 50°, preferably than 55° and/or which is smaller than 80°, preferably than 75°, preferably than 70°, preferably than 65°. It was found out that an angle between 55° and 70°, in particular between 60° and 65° provides a good distance of the focal point of the mirror system so that the camera 21 can take a high-quality image of the dental prosthesis 1. The angle between 40° and 55° and between 70° and 80° are also possible but yield worse results than the previously mentioned angles. This allows that the peripheral side of the dental prosthesis 1 placed on the prosthesis portion will be reflected in the mirror system towards the top direction so that the peripheral side of the dental prosthesis 1 is visible from above the visual enhancement device 10. The at least one mirror 12, 13 is arranged preferably such that they extend from the device plane in the top direction with an inclination away from the prosthesis portion. The inclination away from the prosthesis portion shall mean that the distance of the at least one mirror 12, 13 increases from the device plane towards the top direction. Preferably, the at least one mirror 12, 13 does not continue to extend below the device plane.

Preferably, the mirror system and/or the at least one indirect perspective view is configured to show at least two peripheral sides/perspective views of the dental prosthesis 1 and/or to show at least 180° of the peripheral side(s) of the dental prosthesis 1. This allows that all sides of the dental prosthesis 1 can be shown in two images. A first image could show the first lay side of the dental prosthesis 1 with the direct perspective view and two peripheral sides (and/or at least 180°) of the dental prosthesis 1 in the at least one indirect view of the mirror system. A second image could then show the second lay side of the dental prosthesis 1 with the direct perspective view and the other two peripheral sides (and/or the other at least 180°) of the dental prosthesis 1 in the at least one indirect view of the mirror system. The second image can be obtained by flipping the dental prosthesis 1 upside down (so that the corresponding opposed lay side is laying on the device plane) so that the other lay side is visible in the second image and by rotating the dental prosthesis 1 (around an axis being perpendicular to the lay side) so that the other 180° or the other two peripheral sides are visible.

The mirror system can comprise one or more mirrors. In the shown embodiment, the mirror system or the at least one mirror comprises a first mirror 12 and a second mirror 13. In the shown embodiment, the first mirror 12 is arranged opposed to the second mirror 13 so that the mirror system or the two mirrors 12 and 13 show two opposed peripheral sides of the dental prosthesis 1 or two opposing 90° peripheral views of the dental prosthesis 1 (when the dental prosthesis 1 is placed between the two mirrors 12, 13). The two mirrors 12 and 13 are preferably arranged such that the intersection line of the first mirror 12 intersecting with the device plane is parallel to the intersection line of the second mirror 13 with device plane. Obviously, the two mirrors 12, 13 could also be arranged next two each other, e.g. at an angle of 90° of their intersection lines with the device plane so that the two mirrors show two adjacent peripheral sides of the dental prosthesis 1. A higher number of mirrors 12, 13 is also possible to show more indirect perspective views on the same photo. For example, another embodiment could have four mirrors which could be arranged around the prosthesis portion to show all (four) peripheral side(s) of the dental prosthesis placed on the prosthesis portion. The four mirrors could form with their intersection lines with the device plane a rectangular (for example a quadrat). The four mirrors could form thus a rectangular (tronco) cone which opens towards the top direction. A tronco cone is a cone whose tip is cut-off, preferably in the device plane and/or perpendicular to the device axis 14 or to the cone axis. In such an embodiment, the mirrors could hold themselves in their position, if they are connected between them at the edges of the rectangular cone. In such an embodiment, the base structure 11 could be avoided.

The mirror(s) 12, 13 of the mirror system is/are preferably flat mirror(s) so that a reflection by the mirror(s) 12, 13 is not distorted by a curvature of the mirror. However, it would also be possible to use curved mirror(s) in the mirror system. For example, the mirror could be arranged circular around the prosthesis portion so that mirror forms a (circular) (tronco)conical shape which opens towards the top direction. This allows to show all peripheral sides and/or 360° of the dental prosthesis 1 at once (i.e. in one image). Similar than in the rectangular conical shape above, the curved mirror surface would not need necessarily a base structure 11 to hold the mirror system in place as the cone could be placed on a flat surface with the lower opening of the tronco cone.

The mirror(s) 12, 13 can be made of a rigid material like glass or hard plastic as shown in the embodiment of the figures. However, the mirror(s) 12, 13 can also be made of an elastic material like a cardboard or an elastic plastic (with the respective reflective surface treatment).

The visual enhancement device 10 can comprise positioning means to position the camera 21 in an optimized position/distance to take the photo of the dental prosthesis 1 placed on the visual enhancement device 10. Preferably, the positioning means is a pattern 16 printed on the visual enhancement device 10. When the camera 21 shows on the display of the camera a reference pattern, the camera 21 can be positioned such that the pattern 16 printed on the visual enhancement device 10 corresponds to the reference pattern shown on the display of the camera 21. In the present embodiment, the pattern 16 comprises two parallel lines and one line being perpendicular to the other two lines. A standard grid shown on the display of the camera 21 can then be displayed on the display of the camera 21 over the image received in the image chip of the camera 21. When the grid 16 of the image received in the image chip of the camera 21 corresponds to the grid overlayed on the image on the display of the camera 21, the camera 21 is in an optimal position and the photographic image of the dental prosthesis 1 on the visual enhancement device 10 can be taken.

The visual enhancement device 10 can preferably be mounted in the mounted state and dismounted in the dismounted state. The previous description of the arrangement of the mirror system holds for the mounted state. In the dismounted state, the visual enhancement device 10 is substantially flat (so that it can be sent with a letter via postal service). Substantially flat shall mean that the dimension of the visual enhancement device in the direction of the device axis is significantly smaller than in the mounted state. In the shown embodiment, the mirror(s) 12, 13 can be removed from the board 11 and be placed flat on the board 11 (as shown in Fig. 3). The visual enhancement device 10 has preferably fixing means 15 allowing to mount the mirrors 12, 13 (or any other mirror system) in the previously described position of the mounted state of the visual enhancement device 10. In the present embodiment, the fixing means 15 is a recess in the board 11 in which the mirrors 12, 13 can be placed and hold in the previously described position. Obviously, other fixing means 15 are possible to hold the mirrors 12, 13 in the described positions. In the embodiments described above with rectangular or circular cones, the mirrors could be formed by a flat mirror surface which is bendable (for the circular cone) or foldable (at the four edges of the four mirrors of the rectangular cone). Two ends of the flat mirror surface could be connected in a position that the flat mirror surface forms the corresponding (rectangular or circular) conical shape of the mirror system in the mounted state. To obtain the dismounted state, the two ends can be disconnected such that the flat mirror surface will again have a flat form in the dismounted state.

When a dental prosthesis is placed on the prosthesis portion of the visual enhancement device 10 and a photographic image 40 (short image) is taken from above the device plane as shown in Fig. 1, the image 40 shows an image portion 23 with the direct perspective view of the dental prosthesis 1 (shown one lay side) and at least one image portion 24, 25 with the at least one indirect perspective view of the dental prosthesis 1 (showing at least on peripheral side). In the present embodiment, the at least one indirect perspective view comprises two indirect perspective views 24, 25 (one provided by each mirror 12 and 13) as shown for example in Fig. 4. The term enhancement refers thus not to enlarging the image of the dental prosthesis 1, but rather to enhancing the direct perspective view of the dental prosthesis 1 by at least another indirect perspective view of the dental prosthesis 1.

The camera 21 is configured to take a photographic image. Preferably, the camera 21 is a digital camera for taking a digital photographic image. The camera 21 is preferably connected over a network to the processing means 30. The network is preferably the internet. The camera 21 is preferably connected wirelessly to the network, e.g. by WLAN or a cellular phone network. The camera 21 is preferably configured to take an image of the dental prosthesis 1 placed on the prosthesis portion of the visual enhancement device 10. The camera 21 is preferably held by a user. The user could be a dentist, a health assistant, somebody who found the dental prosthesis or also the owner of the dental prosthesis. Thus, the camera 21 is preferably independent from the visual enhancement device 10. The process of taking the photographic image will be described in more detail below.

The camera 21 is preferably integrated in a smartphone 20. The term smartphone 20 shall include cell phones and tablets with a camera 21, a display (preferably a touch screen), a cellular phone network connection module and a processor. The cellular phone network connection module comprises preferably a SIM module (hardware SIM or eSIM) for identifying the user in the cell phone network.

The smartphone 20 could have a prosthesis application program running on the smartphone 20. The prosthesis application program (short: prosthesis app) has preferably the function to send the image of the visual enhancement device 10 including the dental prosthesis 1 taken by the camera 21 to the processing device 30. The prosthesis app has preferably further the function to support the user taking the image. The prosthesis app is preferably configured to contemporaneously show a live image currently received by the camera 21 and a reference pattern. The reference pattern is thus virtually overlayed over the live image of the camera 21 on the display of the smartphone 20. The copy of the reference pattern, the pattern 16, is also marked on the visual enhancement device 10 (maybe with a different dimension). The user can then move the camera 21 until the reference pattern corresponds to the pattern 16 shown in the live image of the camera 21. Then, the user can take the image which could also happen automatically by the prosthesis app. This helps to correctly position the camera 21 with respect to the visual enhancement device 10 and increases the quality of the images taken. However, the invention works also without such a positioning support.

The prothesis app is preferably further configured, after the first image has been taken, to guide the user to rotate the dental prosthesis 1 on the visual enhancement device 10 and to take a second image of the rotated dental prosthesis on the visual enhancement device 10. The prosthesis app is preferably configured to output (preferably to display) the user instructions to rotate the dental prosthesis 1 on the prosthesis portion. Preferably, the instructions include to flip the dental prosthesis such that the opposite lay side of the dental prosthesis 1 is visible in the direct view and evtl. also to rotate the dental prosthesis around the device axis such that the missing peripheral side(s) are visible in the second image. In a less preferred embodiment, it is also possible that a third image of the dental prosthesis in the visual enhancement device 10 is necessary. In this case, the prosthesis app would equally guide the user to rotate the dental prosthesis 1 on the visual enhancement device 10 after having taken the second image, to make the third image.

The prosthesis app could be configured to allow a selection of possible processing to do in the processing device 30 based on the image(s) of the dental prosthesis. One possible processing is the identification of the owner/wearer of the dental prosthesis. Another possible processing is to check the state of the dental prosthesis. Another processing could be the registration of the dental prosthesis 1 with the system.

The prosthesis app could be further configured to receive the result of the processing from the processing device 30. The result of the identification can be for example the details of the owner. The result of the state of the dental prosthesis could be a state report or a recommendation. The recommendation could be how to improve the treatment of the dental prosthesis like its cleaning or to send the dental prosthesis to maintenance services or repair services or to renew the dental prosthesis.

The prosthesis app comprises preferably a user login module to identify the user currently using the prosthesis app.

The server 30 can be any remote processing means. The server 30 can be arranged on a single processing means like a computer or on a plurality of processing means like in a server park, a cloud or something the like. The server 30 is preferably connected over the internet to the camera 21 or the smartphone 20 to receive the image(s). The image, if not otherwise specified, refers to the photographic image of the dental prosthesis 1 placed on the visual enhancement device 10 and taken by the camera 2. The images, if not otherwise specified, refers to a first image and a second image and evtl. further images. The first image refers to a first image of the dental prosthesis 1 placed in a first rotational state on the visual enhancement device 10 and taken by the camera 2. The second image refers to a second image of the dental prosthesis 1 placed in a second rotational state on the visual enhancement device 10 and taken by the camera 2, wherein the second rotational state allows to see perspective views of the dental prosthesis 1 which were not yet visible in the first image. Depending on the visual enhancement device 10, it could be necessary to take one or more further images to see perspective views of the dental prosthesis 1 which were not yet visible in the first and second image. However, it is preferred that all perspective views of the dental prosthesis are visible in the first image and the second image.

The server 30 is preferably configured to manage a plurality of users and to identify users (e.g. via the prosthesis app or via a web interface) accessing the server 30. Each user is preferably identified by user credentials. The user credentials are normally a username and password, but could also be a biometric feature, a device feature of the smartphone or something else. This allows to provide the same service described in here for different users and different smartphones 20 (or client devices).

The server 30 is configured to process the image(s) received from the camera 21 or the smartphone 20. The server 30 is in particular configured to analyse the image(s) received, e.g. to identify the owner/wearer or to check the state of the prosthesis.

The registration of a dental prosthesis 1 includes to receive at least one image, preferably two images from the camera 21 or the smartphone 20 and to store the received at least one image in the server 30, preferably in a database related to the server. The at least one image is preferably stored in the registration process in the server 30 associated to its owner/wearer. The owner/wearer can be stored in the database with its name and contact details or as an anonymous identifier which somewhere else is related to the name and contact details. Preferably, the at least one image is stored in the registration process associated to the user which uploaded the at least one image. The user could for example be different from the user/wearer. The user could for example be a dentist or retirement residence registering all dental prosthesis of its clients. The registration of the dental prosthesis 1 could also include to store at least one location of the wearer/owner of the dental prosthesis 1. This information could help to identify the owner of a found dental prosthesis 1.

The identification of the dental prosthesis 1 includes to receive at least one image, preferably two images from the camera 21 or the smartphone 20 and to identify the dental prosthesis 1 shown in the at least one image. Preferably, the server 30 compares the received at least one image with images stored on the server 30 of registered dental prosthesis 1 to identify the dental prosthesis 1 of the at least one image received among the dental prosthesis 1 registered on the server 30. So, preferably, the identification is done based on images of registered dental prosthesis 1 which were taken as well with the visual enhancement device 1. However, it would be also possible to have stored with the registered dental prosthesis other information about the dental prosthesis 1 which allows to identify the dental prosthesis 1 later from an image, e.g. the 3D form the dental prosthesis 1 which can be received for example from the manufacturer or from the prosthesis planner. For the identification, only one image would be sufficient. However, the confidence level of the identification can be increased by the second image, especially, when the number of registered images increase. The identification can be limited to identify the dental prosthesis 1 among all dental prostheses 1 registered in association with one user, e.g. a retirement home. So, if in this retirement home a dental prosthesis was found, it is in most cases sufficient to search among the dental prostheses 1 of this retirement home. The identification process could create a list of most likely registered dental prostheses 1 among which the dental prosthesis 1 to be identified can be found. The list of most likely registered prostheses 1 can be created based on the user associated to the registered prostheses 1 (registered dental prostheses 1 associated to the same user as the one requesting the identification is more likely than a different user) and/or based on the location (registered dental prostheses 1 associated to at least one common location which is closer to the location where the dental prosthesis was found is more likely to be the one which was found). The location where the dental prosthesis 1 was found can be automatically taken from the prosthesis app, when the image is taken, or from the image itself as many images contain the location of the image.

The check of the state of the dental prosthesis comprises to receive at least one image, preferably two images from the camera 21 or the smartphone 20 and to check the state of the dental prosthesis 1 shown in the at least one image. The at least one image comprises preferably at least two images. The at least one image preferably shows the dental prosthesis from all sides. The check of the state of the dental prosthesis 1 comprises preferably the detection of one or more flaws of the dental prosthesis 1, preferably the detection of a non-form related flaw/defect of the dental prosthesis 1, preferably one or more of tartar, oral biofilm, cracks and/or fractures, coloration, or other flaws of the dental prosthesis 1. When detecting a crack in the dental prosthesis 1 (in particular in its tooth or teeth), the probability of a denture fracture is preferably calculated. The check of the state of the dental prosthesis 1 is performed in the server 30 preferably based on an artificial intelligence (Al) engine which identifies the flaws of the dental prosthesis 1 based on the at least one image received. The artificial intelligence engine is preferably trained with a large number of training dental prostheses. For each training dental prosthesis, at least one, preferably at least two training images are taken and all flaws (which shall be detected by the Al engine) are labelled in the at least one image. Labelled means that the location of the flaw in the training image is associated with the type of flaw. The Al engine is then trained by inserting the training images of the dental prostheses 1 with the labels into the Al engine. This allows to detect with the Al engine in the received at least one image the location of a flaw and the type of the flaw. After having a list of detected flaws for the dental prosthesis 1, the state of the dental prosthesis 1 can be given.

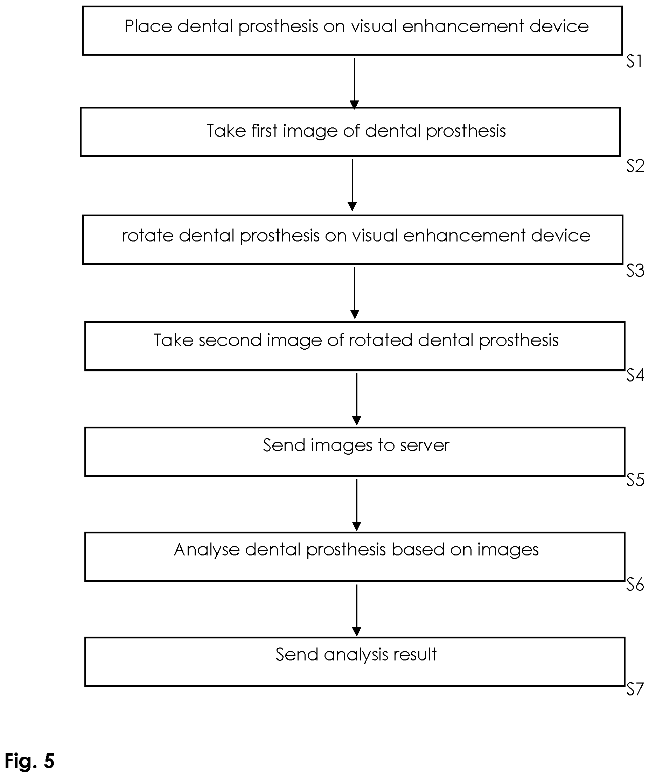

Fig. 5 shows an embodiment of a method to analyse the dental prosthesis 1 according to the invention.

In step S1, a dental prosthesis 1 which shall be analysed is placed on (the prosthesis portion of) the visual enhancement device 10. This step might include to mount the visual enhancement device 10 in the mounted state and/or to place the visual enhancement device. The visual enhancement device 10 is preferably placed on a horizontal surface, like a table surface, so that the device plane is parallel to the horizontal surface and the top direction points upwards (against the direction of gravitation). The dental prosthesis 1 is placed then on the prosthesis portion of the visual enhancement device 10. Preferably, the dental prosthesis 1 is arranged such on the visual enhancement device 10 that the occlusal side of the teeth shows in the top direction as shown in the image 40 taken in Fig. 4. In such an embodiment, the second lay side would correspond to the side of the dental prosthesis 1 including the occlusal side of the teeth and the first lay side to the side opposed to the second lay side. The dental prosthesis 1 would then be placed with the first lay side on the prosthesis portion. However, another arrangement of the dental prosthesis 1 on the prosthesis portion is possible, especially when the dental prosthesis 1 cannot be placed such on the device plane that the occlusal side of the teeth point upwards. The rotational state of the dental prosthesis 1 around the device axis 14 is not important. In the image 40, the labial side (first peripheral side) of the dental prosthesis 1 points to the first mirror 12 and the throat side (second peripheral side) of the dental prosthesis 1 points to the second mirror 13.

In step S2, a first image of the dental prosthesis 1 placed on (the prosthesis portion of) the visual enhancement device 10 is taken with the camera 21, preferably the smartphone 20. This step includes preferably to arrange the camera 21 (or the smartphone 20) such that the image 40 covers the prosthesis portion with the dental prosthesis 1 (direct perspective view) and the mirror system or the at least one mirror 12, 13 with the at least one indirect perspective view of the dental prosthesis 1. The camera 21 is preferably arranged such that the image 40 covers the first mirror 12 and the second mirror 13 such that the first indirect perspective view of the dental prosthesis 1 (with the first peripheral side) and the second indirect perspective view of the dental prosthesis 1 (with the second peripheral side) is visible in the image 40. In a preferred embodiment, the camera 21, preferably the smartphone 20, preferably the prosthesis app includes a positioning help which is configured to help to position the camera 21 in an optimal position. This is preferably done by displaying over the live image of the camera 21 a reference pattern and arranging the camera 21 such that the reference pattern corresponds to (is overlayed over) the pattern 16 marked on the visual enhancement device 10. This optimizes first the image quality but leads also to more similar image conditions. An example of the first image 40 taken is shown in Fig. 4.

In step S3, the dental prosthesis 1 is rotated/turned on the prosthesis portion such that the remaining or other sides of the dental prosthesis 1 are visible in the direct perspective view and in the indirect perspective view(s). Preferably, the dental prosthesis 1 must be flipped up-side down with respect to the device plane and/or rotated by a certain angle (e.g. 90° or 180°) around the device axis 14. As explained above, in the present embodiment of the visual enhancement device 10, the dental prosthesis 1 must be flipped up-side down and rotated around 90° around the device axis 14. Flipped up-side down shall mean that the first lay side which was laying in the first image on the device plane and/or the prosthesis portion will in the second image point in the top direction, while the second lay side which in the first image was pointing in the top direction will lay on the device plane or the prosthesis portion. Preferably, the prosthesis app will output (on the display or via audio output) how the dental prosthesis 1 must be rotated on the prosthesis portion before the second image is taken.

In step S4, a second image of the rotated dental prosthesis 1 placed on the visual enhancement device 10 is taken by the camera 21. The process of taking the second image works equally as taking the first image and is thus not described another time.

The steps S3 and S4 are obviously only necessary, if a second image is necessary for the method. It is also possible to perform the method according to the invention with only one image. In this case, the steps S3 and S4 can be avoided. It is also possible that a third image or even more images are taken for the method of the invention. In this case, for each additional image, the steps S3 and S4 are repeated accordingly. Subsequently, the images shall mean the first image 40 taken in step S2 and the second image taken in step S4. However, if the only one image 40 is taken and no further second image is taken in step S4, the images shall mean the first image 40 (only). On the other side, if more than two images are taken in steps S2 and S4, the images shall mean all the images taken in steps S2 and S4.

In step S5, the images 40 are sent to the server 30. The images 40 are preferably sent to the server 30 via the internet. The images 40 are preferably sent via an internal connection established between the prosthesis app on the smartphone 20 and the server 30. The server 30 preferably identifies the user logged-in the prosthesis app of the smartphone 20 and associates thus the images 40 received in step S5 with the identified user. Preferably, also the location, where the images 40 have been taken and/or where the dental prosthesis 1 was found is sent with the images 40 to the server 30.

In step S6, the server 30 performs an analysis of the dental prosthesis 1 based on the images 40 received. The analysis of the dental prosthesis 1 comprises preferably one or two of identifying the owner/wearer of the dental prosthesis 1 and checking the state of the dental prosthesis 1. The process of identifying the owner/wearer of the dental prosthesis 1 was described above in detail and is not repeated here for the sake of brevity. The process of checking the state of the dental prosthesis 1 was described above in detail and is not repeated here for the sake of brevity. Other analyses of the dental prosthesis 1 based on the images 40 are possible as well.

The step of analysing the dental prosthesis 1 based on the images 40 comprises preferably the step of analysing the dental prosthesis 1 based on a direct perspective view of the dental prosthesis 1 shown in a first portion 23 of the image 40 received in the server 30 and analysing the dental prosthesis 1 based on at least one indirect view of the dental prosthesis 1 in at least one further portion 24, 25 of the first image 40. The direct perspective view of the dental prosthesis 1 of the first image 40 shows (one lay side of) the dental prosthesis 1 on the prosthesis portion of the visual enhancement device 10. The at least one indirect view of the dental prosthesis 1 shows at least one mirror 12, 13 of the visual enhancement device 10 showing a reflection of (a peripheral side of) the dental prosthesis 1 placed on the prosthesis portion of the visual enhancement device 10. Preferably, the step of analysing the dental prosthesis 1 based on at least one indirect view of the dental prosthesis 1 comprises preferably the step of analysing the dental prosthesis 1 based on a first indirect view of the dental prosthesis 1 in the second portion 24 of the first image 40 and based on a second indirect view of the dental prosthesis 1 in the third portion 25 of the first image 40.

The step of analysing the dental prosthesis 1 based on the images 40 comprises preferably the step of analysing the dental prosthesis 1 based on the first image 40 and based on the second image, wherein the second image shows the dental prosthesis 1 on the visual enhancement device 10 in a rotated position compared to the dental prosthesis 1 on the visual enhancement device 10 shown in the first image 40. This allows that the second image shows sides or perspective views of the dental prosthesis 1 which were not visible in the first image 40. The step of analysing the dental prosthesis 1 based on the images 40 or based on the second image comprises preferably the step of analysing the dental prosthesis 1 based on a direct perspective view of the dental prosthesis 1 shown in a first portion of the second image received in the server 30 and analysing the dental prosthesis 1 based on at least one indirect view of the dental prosthesis 1 in at least one further portion of the second image. The direct perspective view of the dental prosthesis 1 of the second image shows (compared to the first image 40 the other lay side of) the dental prosthesis 1 on the prosthesis portion of the visual enhancement device 10. The at least one indirect view of the dental prosthesis 1 in the second image shows at least one mirror of the visual enhancement device 10 showing a reflection of (compared to the first image 40 another peripheral side of) the dental prosthesis 1 placed on the prosthesis portion of the visual enhancement device 10. Preferably, the step of analysing the dental prosthesis 1 based on at least one indirect view of the dental prosthesis 1 of the second image comprises preferably the step of analysing the dental prosthesis 1 based on a first indirect view of the dental prosthesis 1 in the second portion of the second image and based on a second indirect view of the dental prosthesis 1 in the third portion of the second image.

The analysis results in an analysis result. The analysis result for the identifying can be for example the wearer/owner of the dental prosthesis 1 or that he/she were not identified. The analysis result for the check of the state of the dental prosthesis 1 can be that the dental prosthesis 1 is ok or that dental prosthesis 1 is not ok. In the latter case, the analysis/check result could be on such a high level or could give more details like the list of issues/flaws identified in the dental prosthesis 1. The analysis result that the dental prosthesis 1 is not ok could further contain a recommendation like consult to your prosthesis specialist, clean your prosthesis 1 more often or something the like.

In step S7, preferably the analysis result is given out from the server 30. Preferably, the analysis result is sent to the smartphone 20 and/or to the user account of the user who has sent the images 40 to the server 30. The analysis result could also be sent to an associated third user like the dentist or the prosthesis specialist to be informed about the state of the prosthesis or to the wearer/owner of the prosthesis 1 to be informed that the prosthesis 1 was found. However, the step S7 is optional.

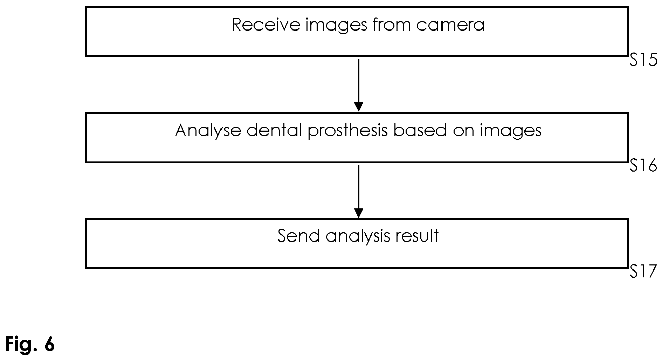

Fig. 6 shows an embodiment of a method to analyse the dental prosthesis 1 according to the invention as performed in the server 30 or in a computer program running on the server.

In step S15, the server 30 receives the at least one image 40 from the camera 21 or the smartphone 20. The at least one image 40 was described in detail in steps S2, S4, S5 and/or S6.

Steps S16 and S17 correspond mainly to the steps S6 and S7 described above.

The functionalities of the server 30 or of the method of Fig. 6 are preferably realised by a computer program running on the server 30.

It should be understood that the present invention is not limited to the described embodiments and that variations can be applied without going outside of the scope of the claims.

## Claims

1. Method for remote analysis of a dental prosthesis (1) comprising the following steps:
placing the dental prosthesis (1) on a visual enhancement device (10), wherein the visual enhancement device (10) comprises a mirror system which allows to show the dental prosthesis (1) from at least one indirect perspective view in addition to a direct perspective view of the dental prosthesis (1),
taking with a camera (21) an image (40) of the dental prosthesis (1) placed on the visual enhancement device (10) such that the image (40) shows the direct perspective view and the at least one indirect perspective view of the dental prosthesis (1),
sending the image (40) of the dental prosthesis (1) to a server (30), and
analysing the image (40) of the dental prosthesis (1) in the server (30).

2. Method according to the previous claim, wherein the visual enhancement device (10) comprises a prosthesis portion arranged in a device plane, wherein the dental prosthesis (1) is placed on the prosthesis portion, wherein the mirror system comprises at least one mirror.

3. Method according to the previous claims, wherein the at least one mirror (12, 13) is arranged such that the normal vector of the reflective surface of the mirror (12, 13) includes a mirror angle with a device axis (14), wherein the mirror angle is between 55° and 70° and wherein the device axis (14) is perpendicular to the device plane.

4. Method according to claim 2 or 3, wherein the at least one mirror (12, 13) extends from the device plane in a top direction with an inclination away from the prosthesis portion, wherein camera (21) is positioned such above the prosthesis portion with the dental prosthesis (1) for taking the image (40) that the at least one mirror opens towards the camera (21).

5. Method according to one of the claims 2 to 4, wherein the at least one mirror (12, 13) comprises two mirrors (12, 13) arranged around the prosthesis portion so that the two mirrors (12, 13) show two indirect perspective views of the dental prosthesis (1) placed on the prosthesis portion.

6. Method according to one of the previous claims, wherein the mirror system and/or the at least one indirect perspective view is configured to show at least two peripheral sides of the dental prosthesis (1) and/or to show at least 180° of the peripheral side(s) of the dental prosthesis (1).

7. Method according to one of the previous claims, wherein the visual enhancement device (10) can be mounted in a mounted state and dismounted in a dismounted state, wherein, in the mounted state, the visual enhancement device (10) is configured to show the dental prosthesis (1) from at least one indirect perspective view in addition to a direct perspective view of the dental prosthesis (1), and, in the dismounted state, the visual enhancement device (10) has a substantially flat arrangement or the at least one mirror (12, 13) is arranged parallel to the device plane or the base structure.

8. Method according to one of the previous claims, wherein the step of taking an image (40) of the dental prosthesis (1) comprises to arrange the camera (21) such above the visual enhancement device (10) that the image (40) covers in a first image portion the direct perspective view of the the dental prosthesis (1) and the mirror system showing the at least one indirect perspective view of the dental prosthesis (1).

9. Method according to one of the previous claims, wherein the dental prosthesis (1) is rotated on the visual enhancement device (10) after the image (40) has been taken by the camera (21) and a second image of the rotated dental prosthesis (1) is taken by the camera (21), wherein the second image is sent to the server (30), wherein the server (30) analyses the dental prosthesis (1) based on the image (40) and based on the second image.

10. Method according to one of the previous claims, wherein analysing the dental prosthesis (1) based on the image (40) comprises the step of analysing the dental prosthesis (1) based on a direct perspective view of the dental prosthesis (1) shown in a first portion (23) of the image (40) and based on at least one indirect view of the dental prosthesis (1) in at least one further portion (23, 24) of the image (40).

11. Method according to one of the previous claims, wherein analysing the dental prosthesis (1) comprises to check the state of the dental prosthesis (1), wherein the state of the dental prosthesis (1) is checked by detecting flaws of the dental prosthesis (1), wherein the flaws are detected based on an artificial intelligence engine, wherein the artificial intelligence engine was trained based on a plurality of training images, wherein the training images show each a dental prosthesis (1) and contain labels, wherein a label indicates an image portion with a flaw of the prosthesis and the type of flaw seen in the image portion.

12. Method for analysis of a dental prosthesis (1) in a server (30) comprising the following steps:
receiving an image (40) at the server (30), wherein the image (40) shows the dental prosthesis (1) on a visual enhancement device (10), wherein the shown visual enhancement device (10) comprises a mirror system, wherein the image (40) shows in a first portion (23) of the image (40) the dental prosthesis (1) from a direct perspective view and in at least a second portion (24, 25) the mirror system showing the dental prosthesis (1) from at least one indirect perspective view, and
analysing in the server (30) the dental prosthesis (1) based on the received image (40).

13. Computer program configured to perform the steps of the method of one of the previous claims, when executed on a processing means.

14. System for remote analysis of a dental prosthesis (1) comprising:
a visual enhancement device (10) comprising a mirror system and a prosthesis portion, wherein the prosthesis portion is configured to place the dental prosthesis (1), wherein the mirror system is configured to show the dental prosthesis (1) placed on the prosthesis portion from at least one indirect perspective view in addition to a direct perspective view of the dental prosthesis (1),
a camera (21) for taking an image (40) of the dental prosthesis (1) placed on the visual enhancement device (10) such that the photo shows the direct perspective view and the at least one indirect perspective view of the dental prosthesis (1),
a server (30) configured to receive the image (40) and to analyse the image (40) of the dental prosthesis (1).

15. Visual enhancement device (10) for taking an image (40) of a dental prosthesis (1), the visual enhancement device (10) comprising:
a prosthesis portion to place the dental prosthesis (1) on it, and
a mirror system configured to show the dental prosthesis (1) from at least one indirect perspective view in addition to a direct perspective view of the dental prosthesis (1).
